# FASCICULE DE BREVET EUROPEEN

(11) **EP 2 084 046 B1**
(45) Date de publication et mention de la délivrance du brevet: **04.05.2011**
(21) Numéro de dépôt: 07866458.8
(22) Date de dépôt: 29.10.2007
(51) Int. Cl.: B61B 1/02, B65G 69/28

(54) **DISPOSITIF POUR COMBLER UNE LACUNE ENTRE UN QUAI ET UN VEHICULE FERROVIAIRE**
VORRICHTUNG ZUR ÜBERBRÜCKEN DER LÜCKE ZWISCHEN EINEM BAHNSTEIG UND EINEM SCHIENENFAHRZEUG
DEVICE FOR FILLING THE GAP BETWEEN A PLATFORM AND A RAILWAY VEHICLE

(30) Priorité: 30.10.2006 FR 0609508
(43) Date de publication de la demande: 05.08.2009
(73) Titulaire: Regie Autonome des Transports Parisiens (RATP), 75012 Paris (FR)
(72) Inventeur: LOMBERTY, Marc, F-31400 Toulouse (FR); KORVER, Florian, GB- NW1 6AP Londres (GB); LAUNAY, Bertrand, F-94120 Fontenay-sous-Bois (FR); BARBE, François, F-65200 Ordizan (FR)
(74) Mandataire: Grand, Guillaume
(86) Numéro de dépôt international: PCT/FR2007/001786
(87) Numéro de publication internationale: WO 2008/053101

(56) Documents cités:
- DE-A1- 3 708 498
- ES-A1- 2 128 234
- FR-A- 2 637 245

## Description

La présente invention concerne un dispositif pour combler une lacune séparant un quai de stationnement de véhicules ferroviaires et un seuil d'accès à un véhicule ferroviaire.

Dans le domaine du transport ferroviaire de personnes, par exemple par métro, de nombreux accidents se produisent lors de l'embarquement et du débarquement des passagers. Une des causes de ces accidents est liée à la présence d'un espace libre non négligeable, appelé couramment lacune, entre le quai le long duquel est stationné un véhicule ferroviaire et les ouvertures d'accès du véhicule, débouchant dans son habitacle interne : le passager doit en effet enjamber cette lacune lorsqu'il rentre dans ou sort du véhicule, en reliant le quai et le seuil des accès au véhicule. En pratique, cette lacune présente généralement une dimension horizontale d'une vingtaine de centimètres, ce qui s'avère particulièrement dangereux pour les enfants, les personnes âgées, les personnes souffrant d'un handicap moteur, etc.

Même en construisant un quai avec son bord ajusté au plus près des véhicules ferroviaires susceptibles de circuler le long de ce quai, les jeux de positionnement de ces véhicules obligent à prévoir un écartement minimal substantiel, et donc dangereux, entre le quai et le contour extérieur du véhicule.

Pour contourner ce problème, une première solution connue consiste à équiper le quai avec des dispositifs à même de combler une partie de l'espace libre séparant le quai d'un véhicule ferroviaire à l'arrêt. Diverses formes de réalisation de ce genre de dispositifs, couramment appelés des comble-lacunes, existent. Les plus performants de ces comble-lacunes, en terme de réduction de l'espace libre séparant le quai d'un véhicule, comportent une partie fixe intégrée à demeure au quai et une partie mobile qui est déployée depuis la partie fixe en direction du véhicule stationné le long du quai, de manière à limiter l'étendue de la lacune à enjamber par les passagers pour embarquer ou débarquer. Un exemple de ce genre de comble-lacune est donné dans ES-A-2 128 234. En pratique, le déploiement de cette partie mobile est motorisée et, grâce à l'intervention d'un opérateur ou par le biais d'un système de supervision, ce déploiement est synchronisé avec l'arrêt à quai du véhicule.

Toutefois, ce genre de comble-lacune à partie mobile ne donne pas satisfaction dans de nombreux cas de figure. En effet, si le quai est courbe, le dimensionnement du déploiement de la partie mobile est basé sur une position d'arrêt du véhicule la plus favorable du point de vue de l'écartement entre le quai et le véhicule, c'est-à-dire pour l'écartement le plus faible, alors que, en service, les véhicules s'arrêtent dans des positions moins favorables, c'est-à-dire avec un écartement plus important, que la partie mobile du comble-lacune ne compense alors que partiellement, voire presque pas. De plus, même pour un quai rectiligne, si plusieurs gabarits de véhicules sont susceptibles de s'arrêter le long du quai, le dimensionnement du déploiement de la partie mobile du comble-lacune est basé sur le gabarit du véhicule le plus large, pour éviter toute interférence mécanique avec les contours extérieurs des divers véhicules, quel que soit leur gabarit. En outre, la course de déploiement de la partie mobile est généralement minorée d'un facteur de sécurité, pour prendre en compte une éventuelle dérive du véhicule à quai, par exemple consécutive à un effet d'entraînement inertiel du véhicule, à un relâchement prématuré de ses freins, ...

Une autre solution connue pour contourner le problème évoqué en introduction consiste à équiper le seuil des portes d'un véhicule, d'un marchepied mobile. DE-A-37 08 498 propose même d'intégrer à la partie mobile de ce genre de marchepied des capteurs sans contact, de type pneumatique ou à ultra-sons. Une telle solution théorique est coûteuse et très difficile à mettre en oeuvre en environnement ferroviaire, notamment en raison des contraintes de service particulièrement éprouvantes pour les matériels embarqués. En outre, le déploiement du marchepied proposé dans ce document est incapable de tenir compte de la dérive potentielle du véhicule à quai, comme évoqué ci-dessus, ce qui induit soit un risque de chute pour les passagers si la lacune résiduelle augmente lors de l'embarquement/débarquement, soit un risque de collision avec le quai si cette lacune résiduelle diminue.

Le but de la présente invention est de proposer un comble-lacune à partie mobile, qui soit à la fois fiable et plus sûr, notamment en s'adaptant efficacement à une éventuelle dérive des véhicules ferroviaires à quai.

A cet effet, l'invention a pour objet un dispositif pour combler une lacune séparant un quai de stationnement de véhicules ferroviaires et un seuil d'accès à un véhicule ferroviaire, tel que défini à la revendication 1.

Selon l'invention, le ou les télémètres et les moyens de commande permettent à la partie mobile du comble-lacune de s'adapter à des variations de la distance horizontale entre le bord libre de cette partie mobile et le seuil d'accès du véhicule à quai. Autrement dit, à la différence d'une course de déploiement dont la valeur serait fixée à l'avance, la course de déploiement de la partie mobile du dispositif selon l'invention est variable, de manière à s'adapter à la position effective du seuil d'accès du véhicule par rapport au quai, en déployant suffisamment la partie mobile pour que l'écart résiduel entre son bord libre et le seuil d'accès soit inférieur à une valeur prédéterminée, typiquement de l'ordre de 15 mm. Cette capacité d'adaptation en service de la course de déploiement de la partie mobile, pour amener son bord libre au plus près du seuil d'accès du véhicule à quai, rend le dispositif selon l'invention particulièrement performant en terme de sécurité pour les passagers embarquant ou débarquant, y compris dans des cas plus particulièrement dangereux, tels que par exemple pour un quai courbe et/ou pour un quai le long duquel différents gabarits de véhicules ferroviaires sont susceptibles de circuler. En outre, grâce à l'invention, l'adaptation du comble-lacune est réalisée en temps réel, ce qui permet d'ajuster la position relative entre la partie mobile et le véhicule en tenant compte d'une dérive de ce dernier. La sécurité des voyageurs est renforcée puisque l'écart résiduel demeure alors inférieur à une valeur de sécurité prédéterminée, tout en évitant une collision entre la partie mobile et le véhicule, étant remarqué que les vitesses en jeu, tant celle du véhicule qui dérive, que celle de la partie mobile entraînée, sont suffisamment faibles pour ne pas destabiliser les voyageurs qui débarquent ou embarquent.

Des caractéristiques additionnelles avantageuses de ce dispositif, prises isolément ou suivant toutes les combinaisons techniquement possibles, sont énoncées aux revendications dépendantes 2 à 10.

Grâce à la disposition conforme à la revendication 5, la partie mobile du comble-lacune intègre une autre fonction sécuritaire, puisque, si un passager ou un obstacle se trouve malencontreusement sur la trajectoire de déploiement de la partie mobile ou bien si un passager reste en appui sur la partie mobile alors que l'escamotage de cette dernière est commandé, la présence de ce passager ou de cet obstacle est détectée par le ou les capteurs sensibles à la pression intégrés à la partie mobile. Par l'intermédiaire d'un signal d'alerte fourni par ce ou ces capteurs et avantageusement traité par une unité ad hoc, les risques d'accident sont limités, notamment en commandant l'arrêt de tout mouvement de la partie mobile susceptible de blesser le passager en difficulté ou d'endommager le dispositif. Grâce à cette disposition, le dispositif selon l'invention peut avantageusement être utilisé sans être associé à une porte palière solidaire du quai, la fonction sécuritaire assurée par ce genre de porte étant intégrée à la partie mobile.

L'invention sera mieux comprise à la lecture de la description qui va suivre, donnée uniquement à titre d'exemple et faite en se référant aux dessins sur lesquels :
- la figure 1 est une vue schématique en élévation de dessus d'une station de métro, équipée de dispositifs selon l'invention ;
- la figure 2 est une coupe partielle selon la ligne II-II de la figure 1 ;
- la figure 3 est une vue en perspective et partiellement en arraché d'un des dispositifs de la figure 1, représenté partiellement ;
- la figure 4 est une vue en perspective de la partie mobile du dispositif de la figure 3, sous un angle de vue différent de celui de la figure 3 ; et
- les figures 5 et 6 sont des coupes selon respectivement les plans V et VI de la figure 3, le plan II indiqué sur cette figure correspondant au plan de la figure 2.

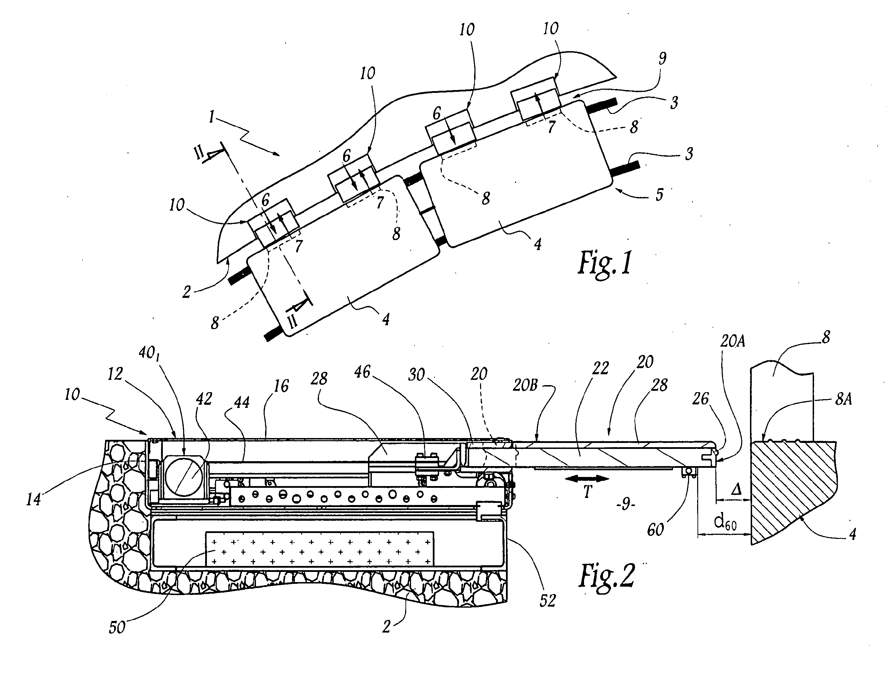

Sur la figure 1 est représentée une station de métro 1 comportant un quai 2 courbe, c'est-à-dire un quai dont le bord présente, vu de dessus comme à la figure 1, un profil incurvé. La station 1 comporte également une paire de rails 3 sur lesquelles des rames de métro sont destinées à circuler pour le transport de voyageurs. Sur la figure 1, on voit ainsi des wagons 4 d'une rame 5 stationnée le long du quai 2, pour permettre l'embarquement, indiqué par des flèches 6, et le débarquement, indiqué par des flèches 7, de passagers entre chaque wagon et le quai. A cet effet, chaque wagon 4 délimite des ouvertures 8 d'accès au wagon, qui sont associées à des portes, non représentées, intégrées au wagon et destinées à fermer les ouvertures lorsque la rame 5 est en mouvement, tandis que le dégagement des ouvertures par ces portes est commandé lorsque le wagon est stationné de manière sensiblement immobile le long du quai 2, comme à la figure 1.

Comme bien visible à la figure 2, un espace libre 9, appelé lacune par la suite, sépare horizontalement les wagons 4 du quai 2, notamment au niveau de chaque ouverture 8. En pratique, cette lacune présente une dimension horizontale de l'ordre d'une vingtaine de centimètres.

Pour permettre aux passagers embarquant ou débarquant de franchir en sécurité la lacune 9, le quai 2 est équipé de plusieurs comble-lacunes 10, c'est-à-dire de dispositifs respectivement prévus pour combler au moins partiellement les régions de la lacune séparant horizontalement le quai et les seuils 8A des ouvertures 8 d'accès aux wagons 4. Par commodité, un seul de ces dispositifs va être décrit ci-dessous en détail, étant entendu que les différents dispositifs implantés le long du quai présentent des aménagements analogues les uns aux autres.

Comme représenté plus en détail sur les figures 2 à 6, le comble-lacune 10 comporte une partie fixe 12 solidarisée à demeure au quai 2. Cette partie fixe 12 comporte un caisson principal 14 rigide, réalisé par exemple en tôles pliées et soudées. Le caisson 14 présente une forme globalement parallélépipédique et est rapporté de manière fixe dans le quai 2 de manière que, d'une part, sa face supérieure s'étende sensiblement en affleurement de la face supérieure de la partie du quai 2 entourant le caisson et, d'autre part, sa face latérale tournée vers les rails 3 s'étende sensiblement en affleurement de la face verticale du bord libre du quai 2.

Dans la forme de réalisation considérée ici, le volume interne du caisson 14 est subdivisé en trois compartiments distincts, répartis suivant la direction longitudinale du quai, définissant ainsi respectivement trois modules pour la partie fixe 12, à savoir deux modules terminaux 12₁ et 12₂ au niveau des parties d'extrémité longitudinale du caisson et un module intermédiaire 12₃ entre les modules terminaux 12₁ et 12₂.

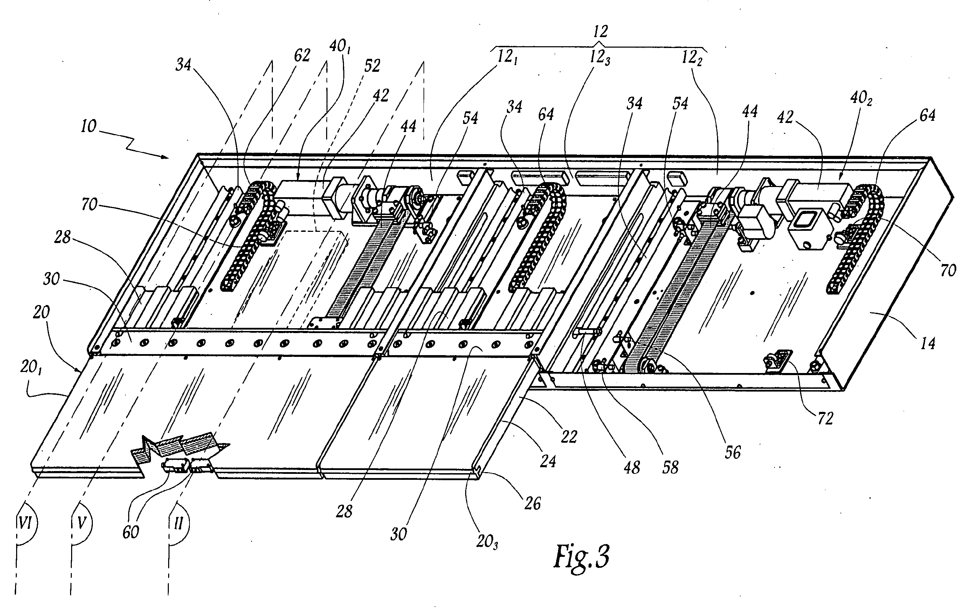

En pratique, les volumes internes des modules 12₁ à 12₃ sont fermés au niveau de la face supérieure du caisson 14, par une plaque de fermeture commune 16 qui, pour des raisons de visibilité, n'est pas représentée sur la figure 3.

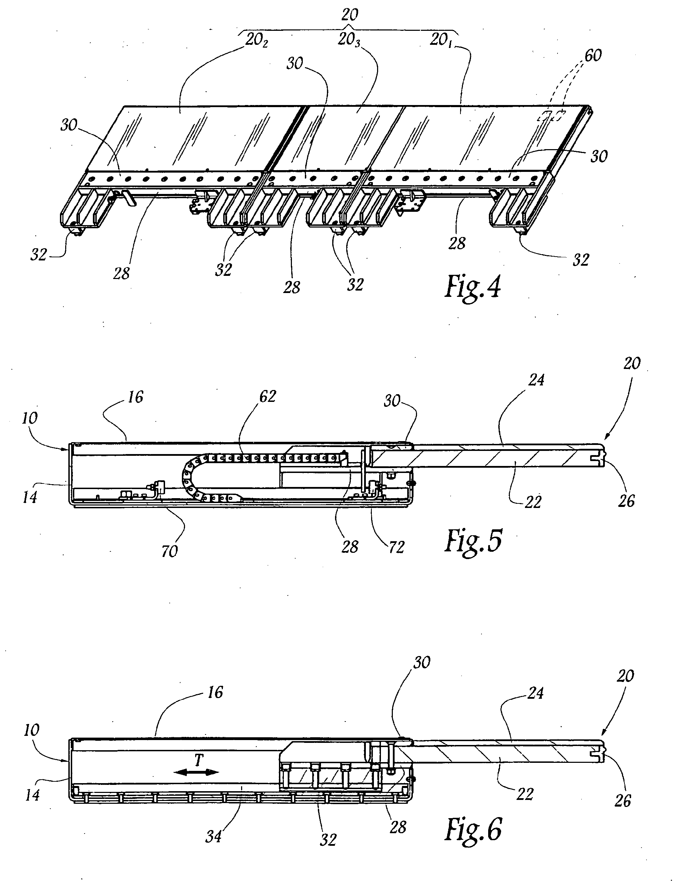

Le comble-lacune 10 comporte également une partie mobile 20, représentée seule à la figure 4, qui est reliée à la partie fixe 12 de manière déplaçable, comme détaillé ci-après. Ici, la partie mobile 20 est constituée de trois modules distincts 20₁, 20₂ et 20₃, respectivement associés aux modules 12₁ à 12₃ de la partie fixe 12. Sur la figure 3, le module 20₂ n'est pas représenté pour des raisons de visibilité.

Chaque module 20₁, 20₂, 20₃ comporte un panneau principal 22 sensiblement horizontal, présentant avantageusement une structure interne en nid d'abeilles, réalisée de préférence en aluminium ou en alliage à base d'aluminium. Cette structure en nid d'abeilles rend le panneau fusible, dans le sens où, en cas de choc accidentel entre ce panneau et l'un des wagons 4, cette structure absorbe l'essentiel de l'énergie du choc, en s'écrasant sans opposer de résistance significative, ce qui limite l'endommagement du wagon, et sans projeter de débris dangereux.

La face supérieure de chaque panneau 22 est recouverte par un tapis 24 sensible à la pression, destiné notamment à détecter la présence d'un voyageur en appui sur la partie mobile 20. De même, la face latérale de chaque panneau tournée à l'opposé de la partie fixe 12 est recouverte par une bordure 26 sensible à la pression, destinée à détecter la présence d'un obstacle résistant le long de la partie mobile. Le tapis 24 et la bordure 26 se présentent sous la forme de corps en polymère, collés directement sur le panneau 22 et dans lesquels sont noyés un ou plusieurs capteurs sensibles à la pression.

Le côté latéral de chaque panneau 22, opposé à la bordure 26, est encastré dans un longeron profilé 28 surmonté d'une contreplaque d'encastrement 30. A chacune de ses extrémités longitudinales, le longeron 28 est muni d'un coulisseau inférieur 32 adapté pour glisser en translation le long d'un rail de guidage 34 intégré de manière fixe à l'intérieur du caisson 14, comme bien visible à la figure 6. De la sorte, les déplacements de chaque module 20₁, 20₂, 20₃ de la partie mobile 20 par rapport au module correspondant 12₁, 12₂, 12₃ de la partie fixe 12 sont guidés par la coopération des coulisseaux 32 et des rails 34: chaque module 20₁, 20₂, 20₃ est ainsi déplaçable en translation le long des rails 34 du module correspondant 12₁, 12₂, 12₃, c'est-à-dire selon une direction T sensiblement perpendiculaire à la direction longitudinale du quai 2. La partie mobile 20 peut ainsi être translatée entre deux configurations extrêmes par rapport à la partie fixe 12, à savoir une configuration déployée représentée aux figures, dans laquelle l'essentiel de chaque panneau 22 est situé à l'extérieur du caisson 14, à l'aplomb de la lacune 9, et une configuration escamotée, indiquée de manière partielle par des pointillés uniquement à la figure 2, dans laquelle la partie mobile 20, notamment les panneaux 22, est pour l'essentiel, voire totalement logée à l'intérieur du caisson 14.

Pour entraîner la partie mobile entre ces configurations déployée et escamotée, le comble-lacune 10 comporte deux unités motrices distinctes 40₁ et 40₂, analogues l'une à l'autre et respectivement agencées entre les modules terminaux 12₁ et 12₂ de la partie fixe 12 et les modules terminaux 20₁ et 20₂ de la partie mobile 20. Chaque unité motrice 40₁, 40₂ comporte un moto-réducteur électrique réversible 42 dont l'arbre de sortie est accouplé à une courroie de transmission 44 lié en mouvement au longeron 28 du module correspondant 20₁, 20₂, par l'intermédiaire d'une platine vissée 46, comme bien visible à la figure 2. L'actionnement du moto-réducteur 42 provoque, par l'intermédiaire de la courroie 44, l'entraînement en translation du panneau 22 du module correspondant 20₁, 20₂, tandis que le panneau 22 du module intermédiaire 20₃ est entraîné par rapport au module intermédiaire 12₃ par l'intermédiaire d'axes 48, dont l'un est visible à la figure 3, qui lient mécaniquement, sans jeu, le panneau précité avec les panneaux 22 des modules terminaux 20₁ et 20₂. La présence des axes de liaison 48 rend, en quelque sorte, redondante la double motorisation assurée par les unités 40₁ et 40₂, ce qui garantit toutefois un haut niveau de sécurité et de disponibilité du comble-lacune 10 : en appliquant les efforts moteurs à chaque extrémité longitudinale de la partie mobile 20, la trajectoire translative de cette dernière est mieux contrôlée, en évitant par exemple un comportement dissymétrique, et, même si l'une des unités 40₁ et 40₂ est défaillante, l'autre unité garantit une continuité de service.

Pour commander le déploiement et l'escamotage de la partie mobile 20, le comble-lacune 10 comporte une unité électronique de commande 50, avantageusement intégrée à la partie fixe 12, notamment dans un boîtier dédié 52 rapporté au caisson 14, au-dessous de ce dernier dans l'exemple considéré aux figures, comme bien visible à la figure 2. L'unité de commande 50, représentée de manière uniquement schématique sous forme d'un bloc, est, de manière non représentée, reliée à une source d'alimentation électrique, qui, en pratique, peut être la même que celle alimentant les moto-réducteurs 42.

Pour disposer d'informations relatives à la position de la partie mobile 20 par rapport à la partie fixe 12, l'unité 50 est reliée, par une liaison filaire ou analogue non représentée, à divers détecteurs de position intégrés de manière fixe à la partie fixe 12 : chaque module terminal 12₁, 12₂ est équipé des mêmes trois détecteurs de position, à savoir un détecteur 54 de la configuration escamotée de la partie mobile 20, un détecteur 56 de la configuration déployée de cette partie mobile, et un détecteur de surcourse 58. Ces détecteurs 54, 56 et 58 sont avantageusement de nature inductive, c'est-à-dire qu'ils fournissent un signal de sortie fonction de la variation d'un flux magnétique dans un enroulement de mesure intégré au détecteur, de sorte que le signal de sortie de ce détecteur est modifié selon que l'un des panneaux 22 se trouve ou non à proximité immédiate de ces détecteurs. En fonction des signaux de sortie fournis par ces détecteurs, l'unité de commande 50 est apte à déterminer une position approximative des panneaux 22, aux fins de commande des unités motrices 40₁ et 40₂.

Le fait de dupliquer le groupe des trois détecteurs 54, 56 et 58 au niveau des modules 12₁ et 12₂ fournit à l'unité 50 des informations redondantes en ce qui concerne la position de la partie mobile 20 puisque les trois panneaux 22 sont liés les uns aux autres, mais cela garantit une grande sécurité de fonctionnement. Cela permet également, en option, de diagnostiquer d'éventuels disfonctionnements des détecteurs. Bien entendu, cet agencement nécessite un bon synchronisme de l'unité 50 en ce qui concerne la commande des unités motrices 40₁ et 40₂.

L'unité de commande 50 est en outre reliée à un télémètre 60 porté par la partie mobile 20 et apte à mesurer la distance horizontale séparant ce télémètre d'un obstacle en regard. Dans l'exemple de réalisation considéré aux figures, deux télémètres 60 sont prévus à des fins de sécurité, ces deux télémètres fonctionnant de manière identique, de sorte que la défaillance d'un de ces télémètres n'entraîne pas le disfonctionnement global du comble-lacune 10.

Chaque télémètre 60 est rapporté de manière fixe contre la face inférieure du panneau 22 du module 20₁, à proximité de sa bordure 26, comme bien visible à la figure 2. Chaque télémètre est dirigé à l'opposé de la partie fixe 12, dans le sens où il émet un signal de mesure, de nature optique, acoustique, radioélectrique ou autre, dans une direction horizontale opposée à cette partie fixe. De manière particulièrement préférée, les télémètres 60 sont des capteurs lasers, dont le fonctionnement, qui repose sur la réflexion d'un rayonnement laser, supporte de manière fiable et efficace les contraintes de service de l'environnement ferroviaire.

De la sorte, lorsque l'un des wagons 4 est stationné le long du quai 2, chaque télémètre 60 est à même de mesurer la distance horizontale d₆₀ qui le sépare du wagon. La mesure de cette distance d₆₀ est fournie à l'unité 50 par une liaison filaire ou analogue, non représentée, avantageusement supportée par une chaîne porte-câble 62 reliant de manière souple le longeron 28 du module 20₁ et le module 12₁, comme bien visible à la figure 5.

L'unité de commande 50 est adaptée pour traiter les signaux de mesure fournis par les télémètres 60 de manière à déployer la partie mobile 20 au plus près du seuil 8A d'accès au wagon 4 stationné en regard du comble-lacune 10, pour combler au maximum la région correspondante de la lacune 9. Pour ce faire, l'unité 50 est apte, par exemple par une programmation préalable ou par un circuit électronique approprié, à comparer la valeur des mesures fournies par les télémètres à une constante préfixée : par exemple, tant que la valeur des mesures est supérieure à cette constante de comparaison, l'unité 50 est prévue pour actionner les unités motrices 40₁ et 40₂ afin de déployer davantage la partie mobile 20, rapprochant ainsi son bord libre 20A, constituée par la bordure 26 dans l'exemple de réalisation considéré ici, vis-à-vis du seuil d'accès 8A. Il en résulte une diminution de la distance d₆₀, jusqu'à ce que la valeur des mesures par les télémètres devienne égale, voire inférieure à la constante de comparaison : la distance entre le bord libre 20A de la partie mobile 20 et le seuil d'accès 8A est alors inférieure à une valeur prédéterminée Δ représentative de la dimension horizontale de l'écart résiduel maximal à franchir par un passager pour embarquer ou débarquer. La valeur Δ est par exemple de 15 mm, étant entendu qu'elle est réglable avant la mise en service du comble-lacune 10, puisqu'elle dépend directement de la constante de comparaison utilisée par l'unité 50, la valeur de cette constante étant par exemple préprogrammée ou résultant d'un étalonnage préalable.

En pratique, le traitement des signaux fournis par les télémètres 60 par l'unité 50 ne présente un intérêt pratique que lorsque la partie mobile 20 est en configuration déployée, repérée par les détecteurs 56, afin de positionner alors finement le bord libre 20A de la partie mobile vis-à-vis du seuil d'accès 8A au wagon. En outre, l'unité 50 effectue ce traitement en temps réel, c'est-à-dire qu'elle traite immédiatement les signaux fournis par les télémètres 60 après leur acquisition et fournit en réponse des signaux d'actionnement des unités motrices 40₁ et 40₂ en un minimum de temps, étant entendu que les mesures par les télémètres sont effectuées de manière sensiblement continue dans le temps. Typiquement, les télémètres 60 et l'unité de commande 50 fonctionnent avec une fréquence d'au moins 100 MHz.

Avantageusement, l'unité de commande 50 est également adaptée pour traiter les signaux de sortie fournis par les capteurs sensibles à la pression du tapis 24 et de la bordure 26. En pratique, ces capteurs sont reliés à l'unité 50 par des liaisons filaires ou analogues, amenées de la partie mobile 20 à la partie fixe 12 par la chaîne porte-câble 62 entre les modules 12₁ et 20₁ et par deux autres chaînes porte-câble analogues 64 respectivement entre les modules 12₂ et 20₂ et entre les modules 12₃ et 20₃.

Pour des raisons de sécurité, le dispositif 10 est également équipé de butées mécaniques de surcourse pour la partie mobile 20 : dans l'exemple considéré aux figures, chaque module terminal 12₁, 12₂ est muni, à la fois, d'une butée de surcourse 70 pour la configuration escamotée et d'une butée de surcourse 72 pour la configuration déployée, étant entendu que l'immobilisation de la partie mobile par contact contre l'une ou l'autre de ces butées n'intervient qu'en cas de défaillance de l'arrêt des unités motrices 40₁ et 40₂ par l'unité de commande 50.

Le fonctionnement du comble-lacune 10 est le suivant.

Lorsque la rame 5 est stationnée le long du quai 2 comme à la figure 1, l'unité 50 commande le déploiement de la partie mobile 20 afin de combler au moins une partie substantielle de la lacune 9. En se basant sur les signaux fournis par les détecteurs 54 et 56, l'unité 50 actionne les unités motrices 40₁ et 40₂, pour passer la partie mobile de la configuration escamotée à la configuration déployée. Lors de ce déploiement, la bordure 26 peut détecter un éventuel obstacle et, si tel est le cas, elle émet un signal correspondant qui, après traitement par l'unité 50, commande l'arrêt des unités motrices 40₁ et 40₂.

Lorsque les capteurs 56 avertissent l'unité 50 que la configuration déployée est atteinte, cette unité traite en temps réel les signaux de mesure fournis par les télémètres 60 et maintient l'entraînement en déploiement de la partie mobile par les unités motrices tant que la distance horizontale entre le bord libre 20A de la partie mobile et le seuil 8A d'accès au wagon 4 est supérieure à la valeur Δ, puis l'unité 50 commande l'arrêt des unités motrices : le dispositif 10 est alors dans la configuration représentée à la figure 2, avec le bord libre 20A de sa partie mobile au plus près du seuil 8A pour limiter les risques d'accident pour les passagers embarquant ou débarquant par l'ouverture 8 du wagon 4. On comprend que la course de déploiement de la partie mobile par rapport à la partie fixe tient compte de la position effective du wagon par rapport au quai 2.

Suivant une disposition avantageuse, l'unité 50 veille, lorsque la partie mobile 20 est en configuration déployée, que la valeur de la distance entre le bord 20A et le seuil 8A soit maintenue non nulle, voire supérieure à une valeur prédéterminée δ strictement inférieure à la valeur prédéterminée Δ, afin d'empêcher la mise en contact du bord 20A contre le seuil 8A.

L'unité 50 continue de traiter les signaux de mesure fournis par les télémètres 60 pendant l'échange de voyageurs et, si besoin, corrige en temps réel la position déployée de la partie mobile 20, en actionnant de manière correspondante les unités motrices 40₁ et 40₂. Le comble-lacune 10 tient ainsi compte d'une éventuelle dérive du wagon 4 le long du quai 2. En pratique, la vitesse de dérive du wagon est faible par nature, de sorte que la vitesse et l'amplitude de la correction du déplacement de la partie 20 sont suffisamment modérées pour être quasiment imperceptibles pour les voyageurs qui empruntent cette partie, tant ceux qui marchent que ceux en fauteuils roulants. D'ailleurs; en pratique, la valeur prédéterminée Δ précitée et la vitesse de correction en temps réel de la position de la partie mobile 20 sont paramétrables.

On comprend que l'asservissement des unités motrices 40₁ et 40₂ par l'unité 50 est en boucle fermée pendant l'échange des voyageurs.

Une fois l'échange de passagers terminé, l'unité 50 commande l'escamotage de la partie mobile 20 par actionnement inverse des unités motrices 40₁ et 40₂. Cette commande est toutefois neutralisée par l'unité 50 si le tapis 24 détecte la présence d'un voyageur sur la face supérieure 20B de la partie mobile, constituée essentiellement par ce tapis.

En pratique, l'activation de l'unité de commande 50 peut être automatisée, en étant placée par exemple sous la supervision d'un centre de gestion de la station de métro 1, ou demandée par un opérateur, notamment le conducteur de la rame 5.

Tous les comble-lacunes 10 du quai 2 fonctionnent de la même manière, étant entendu que les courses de déploiement des parties mobiles de chacun de ces dispositifs peuvent être légèrement différentes les unes des autres, notamment en raison de la courbure du quai 2. En revanche, grâce aux télémètres 60 et aux unités de commande 50 de chacun de ces comble-lacunes, les valeurs de la distance horizontale entre les bords libres 20A de chacune des parties mobiles et chacun des seuil d'accès 8A correspondants sont toutes inférieures à la valeur Δ quelles que soient les positions de stationnement des wagons 4 le long du quai.

Divers aménagements et variantes au comble-lacune 10 décrit ci-dessus sont par ailleurs envisageables :
- grâce à leur conception modulaire, les parties fixe 12 et mobile 20 permettent d'adapter facilement la dimension longitudinale du comble-lacune 10 à divers types de quai et/ou à divers types de seuil d'accès de véhicule ferroviaire ; par exemple, plusieurs modules intermédiaires 12₃ et 20₃ peuvent être juxtaposés les uns à côté des autres, respectivement entre les modules terminaux 12₁ et 12₂ et entre les modules terminaux 20₁ et 20₂ ;
- un mécanisme de verrouillage mécanique peut être intégré au dispositif, afin d'immobiliser la partie mobile 20 en configuration escamotée, notamment lors d'interventions de maintenance; de même, un verrou mécanique associé à la configuration déployée peut être intégré au comble-lacune, de manière que ce verrou empêche mécaniquement, à titre de sécurité, que la partie mobile ne se replie intempestivement au-delà d'une valeur de lacune résiduelle considérée dangereuse ; bien entendu, l'implantation de ce verrou est prévue pour ne pas gêner la régularisation par l'unité 50 du positionnement de la partie mobile par rapport au wagon 4 durant l'échange des passagers, sauf en cas de dysfonctionnement de cette unité ; et/ou
- des éléments de signalisation sonore et/ou lumineuse peuvent être incorporés au comble-lacune 10, tant au niveau de sa partie mobile 20, qu'au niveau de sa partie fixe 12 ; ainsi, la plaque 16 est par exemple munie d'une bande podotactile, d'un système de balisage lumineux, etc. ; de même, un moyen d'éclairage peut être associé à la partie fixe du comble-lacune, en y étant intégré ou rapporté au quai, de manière à éclairer en permanence la zone sous le comble-lacune, de sorte que l'attention des voyageurs est attiré par la lumière quand la lacune n'est pas comblée, par exemple en cas de panne du comble-lacune, tandis que cette lumière n'est plus visible par les voyageurs lorsque la partie mobile est déployée.

## Revendications

1. Dispositif (10) pour combler une lacune (9) séparant un quai (2) de stationnement de véhicules ferroviaires et un seuil d'accès (8A) à un véhicule ferroviaire (4), comportant :
- une partie fixe (12) intégrable à demeure à un quai (2),
- une partie mobile (20) reliée à la partie fixe de manière déplaçable entre deux configurations distinctes, dans lesquelles respectivement la partie mobile est escamotée et déployée par rapport à la partie fixe, et
- des moyens motorisés (40₁, 40₂) d'entraînement de la partie mobile (20) par rapport à la partie fixe (12) entre les configurations escamotée et déployée,
**caractérisé en ce que** la partie mobile (20) est munie d'au moins un télémètre (60) adapté pour effectuer de manière continue dans le temps des mesures de la distance horizontale (d₆₀) le séparant d'un véhicule ferroviaire (4) stationné le long du quai (2), et **en ce que** le dispositif (10) comporte en outre des moyens de commande (50), reliés au télémètre (60) et adaptés pour traiter les mesures fournies par le télémètre et pour fournir en réponse des signaux d'actionnement des moyens d'entraînement (40₁, 40₂) en temps réel en fonction de ces mesures, de manière que, dans la configuration déployée, la distance horizontale entre, d'une part, un bord libre (20A) de la partie mobile (20), tournée à l'opposé du quai (2), et, d'autre part, un seuil d'accès (8A) du véhicule stationné (4), est inférieure à une valeur prédéterminée (Δ), quelle que soit la position relative du quai et du véhicule stationné.

2. Dispositif suivant la revendication 1, **caractérisé en ce que** les moyens de commande (50) sont adaptés pour actionner les moyens d'entraînement (40₁, 40₂) en fonction des mesures fournies par le télémètre (60) de manière que, dans la configuration déployée, la distance horizontale entre le bord libre (20A) et le seuil d'accès (8A) est en outre maintenue non nulle, quelle que soit la position relative du quai (2) et du véhicule stationné (4).

3. Dispositif suivant l'une des revendications 1 ou 2, **caractérisé en ce que** le télémètre (60) et les moyens de commande (50) sont adaptés pour fonctionner avec des fréquences d'au moins 100 MHz.

4. Dispositif suivant l'une des revendications précédentes, **caractérisé en ce que** le télémètre (60) est rapporté à la partie mobile (20) de manière adjacente à son bord libre (20A).

5. Dispositif suivant l'une des revendications précédentes, **caractérisé en ce que** la partie mobile (20) est munie d'au moins un capteur sensible à la pression, intégré dans une bordure (26), qui constitue au moins en partie le bord libre (20A) de la partie mobile, et/ou dans un tapis (24) qui constitue au moins en partie la face supérieure (20B) de la partie mobile.

6. Dispositif suivant l'une des revendications précédentes, **caractérisé en ce que** les moyens d'entraînement comportent deux unités motrices (40₁, 40₂), agencées entre la partie mobile (20) et, respectivement, les extrémités (12₁, 12₂) de la partie fixe (12) opposées suivant la direction longitudinale du quai (2).

7. Dispositif suivant l'une des revendications précédentes, **caractérisé en ce que** la partie fixe (12) est subdivisée en plusieurs modules (12₁, 12₂, 12₃) répartis suivant la direction longitudinale du quai (2) et associés à des modules respectifs (20₁, 20₂, 20₃) de la partie mobile (20).

8. Dispositif suivant les revendications 6 et 7 prises ensemble, **caractérisé en ce que**, parmi les modules de la partie fixe (12), deux modules terminaux (12₁, 12₂) sont respectivement prévus aux extrémités opposées de la partie fixe suivant la direction longitudinale du quai (2) et sont respectivement associés aux deux unités motrices (40₁, 40₂), tandis qu'un ou plusieurs modules intermédiaires (12₃) sont prévus entre les modules terminaux.

9. Dispositif suivant l'une des revendications précédentes, **caractérisé en ce que** la partie mobile (20) est essentiellement constituée d'un panneau fusible (22) à structure interne en nid d'abeilles, réalisé notamment en aluminium ou en alliage à base d'aluminium.

10. Dispositif suivant l'une des revendications précédentes, **caractérisé par**, en tant que télémètre, au moins deux capteurs lasers.

## Claims

1. A device (10) for bridging a gap (9) between a platform (2) alongside which rail vehicles stand and a doorway threshold (8A) of a rail vehicle (4), said device comprising:
· a stationary portion (12) incorporatable permanently in a platform (2);
· a moving portion (20) connected to the stationary portion in such a manner as to be movable between two distinct configurations, in which, respectively, the moving portion is retracted and the moving portion is deployed relative to the stationary portion; and
· motorized drive means (40₁, 40₂) for driving the moving portion (20) relative to the stationary portion (12) between the retracted and deployed positions;
said device being **characterized in that** the moving portion (20) is provided with at least one rangefinder (60) adapted to take real-time measurements of the horizontal distance (d₆₀) between it and a rail vehicle (4) standing alongside the platform (2), and **in that** the device (10) further comprises control means (50) connected to the rangefinder (60) and adapted to process the measurements delivered by the rangefinder and to respond in real time by delivering actuation signals for actuating the drive means (40₁, 40₂) as a function of said measurements, so that, in the deployed configuration, the horizontal distance between firstly a free edge (20A) of the moving portion (20) that faces away from the platform (2) and secondly a doorway threshold (8A) of the standing vehicle (4) is less than a predetermined value (Δ), regardless of the relative position of the platform and of the standing vehicle.

2. A device according to claim 1, **characterized in that** the control means (50) are adapted to actuate the drive means (40₁, 40₂) as a function of the measurements delivered by the rangefinder (60) so that, in the deployed configuration, the horizontal distance between the free edge (20A) and the doorway threshold (8A) is also kept greater than zero, regardless of the relative position of the platform (2) and of the standing vehicle (4).

3. A device according to claim 1 or claim 2, **characterized in that** the rangefinder (60) and the control means (50) are adapted to operate at frequencies of at least 100 MHz.

4. A device according to any preceding claim, **characterized in that** the rangefinder (60) is mounted on the moving portion (20) in such a manner as to be adjacent to the free edge (20A) thereof.

5. A device according to any preceding claim, **characterized in that** the moving portion (20) is provided with at least one pressure-sensitive sensor incorporated in edging (26) that constitutes, at least in part, the free edge (20A) of the moving portion, and/or into a mat (24) that constitutes, at least in part, the top face (20B) of the moving portion.

6. A device according to any preceding claim, **characterized in that** the drive means comprise two motor-drive units (40₁, 40₂), arranged between the moving portion (20) and respective ones of the opposite ends (12₁, 12₂) of the stationary portion (12) along the longitudinal axis of the platform (2).

7. A device according to any preceding claim, **characterized in that** the stationary portion (12) is subdivided into a plurality of modules (12₁, 12₂, 12₃) distributed along the longitudinal axis of the platform (2) and associated with respective modules (20₁, 20₂, 20₃) of the moving portion (20).

8. A device according to claims 6 and 7 taken together, **characterized in that**, among the modules of the stationary portion (12), two end modules (12₁, 12₂) are provided at respective ones of opposite ends of the stationary portion along the longitudinal axis of the platform (2) and are associated with respective ones of the two motor-drive units (40₁, 40₂), while one or more intermediate modules (12₃) are provided between the end modules.

9. A device according to any preceding claim, **characterized in that** the moving portion (20) is essentially constituted by a "fuse" panel (22) having a honeycombed internal structure and made, in particular, of aluminum or of an alloy based on aluminum.

10. A device according to any preceding claim, **characterized by** the rangefinder being constituted by at least two laser sensors.

## Patentansprüche

1. Vorrichtung (10) zum Überbrücken einer Lücke (9), die einen Bahnsteig zum Anhalten von Schienenfahrzeugen und eine Eintrittsschwelle (8A) zu einem Schienenfahrzeug (4) trennt, umfassend:
- einen festen Teil (12), der permanent in einen Bahnsteig (2) integrierbar ist,
- einen beweglichen Teil (20), der mit dem festen Teil derart verbunden ist, dass er zwischen zwei unterschiedlichen Ausgestaltungen verschiebbar ist, bei denen jeweils der bewegliche Teil im Verhältnis zum festen Teil eingeklappt und ausgeklappt ist, und
- motorisierte Mittel (40₁, 40₂) zum Antreiben des beweglichen Teils (20) im Verhältnis zum festen Teil (12) zwischen den eingeklappten und ausgeklappten Ausgestaltungen,
**dadurch gekennzeichnet, dass** der bewegliche Teil (20) mit mindestens einem Entfernungsmesser (60) versehen ist, der dazu geeignet ist, um zeitlich durchgehend Messungen des waagerechten Abstands (d₆₀) vorzunehmen, durch den er von einem Schienenfahrzeug (4) getrennt ist, das an dem Bahnsteig (2) anhält, und dass die Vorrichtung (10) ferner Steuermittel (50) umfasst, die mit dem Entfernungsmesser (60) verbunden sind und dazu geeignet sind, um die Messungen zu verarbeiten, die von dem Entfernungsmesser bereitgestellt werden, und um als Antwort Betätigungssignale der Antriebsmittel (40₁, 40₂) in Echtzeit in Abhängigkeit von diesen Messungen bereitzustellen, so dass in der ausgeklappten Ausgestaltung der waagerechte Abstand einerseits zwischen einem freien Rand (20A) des beweglichen Teils (20), der dem Bahnsteig (2) gegenüber zugewandt ist, und andererseits einer Eintrittsschwelle (8A) des anhaltenden Fahrzeugs (4) kleiner als ein vorherbestimmter Wert (Δ) ist, und zwar unabhängig von der relativen Position des Bahnsteigs und des anhaltenden Fahrzeugs.

2. Vorrichtung nach Anspruch 1, **dadurch gekennzeichnet, dass** die Steuermittel (50) dazu geeignet sind, um die Antriebsmittel (40₁, 40₂) in Abhängigkeit der Messungen zu betätigen, die von dem Entfernungsmesser (60) bereitgestellt werden, so dass in der ausgeklappten Ausgestaltung der waagerechte Abstand zwischen dem freien Rand (20A) und der Eintrittsschwelle (8A) ferner ungleich null gehalten wird, unabhängig von der relativen Position des Bahnsteigs (2) und des anhaltenden Fahrzeugs (4).

3. Vorrichtung nach einem der Ansprüche 1 oder 2, **dadurch gekennzeichnet, dass** der Entfernungsmesser (60) und die Steuermittel (50) dazu geeignet sind, um auf Frequenzen von mindestens 100 MHz zu funktionieren.

4. Vorrichtung nach einem der vorhergehenden Ansprüche, **dadurch gekennzeichnet, dass** der Entfernungsmesser (60) an den festen Teil (20) neben seinem freien Rand (20A) angesetzt ist.

5. Vorrichtung nach einem der vorhergehenden Ansprüche, **dadurch gekennzeichnet, dass** der bewegliche Teil (20) mit mindestens einem druckempfindlichen Sensor versehen ist, der in eine Einfassung (26), die mindestens teilweise den freien Rand (20A) des beweglichen Teils bildet, und/oder in einen Bodenbelag (24), der mindestens teilweise die obere Seite (20B) des beweglichen Teils bildet, integriert ist.

6. Vorrichtung nach einem der vorhergehenden Ansprüche, **dadurch gekennzeichnet, dass** die Antriebsmittel zwei Triebeinheiten (40₁, 40₂) umfassen, die zwischen dem beweglichen Teil (20) und jeweils den Enden (12₁, 12₂) des festen Teils (12) angeordnet sind, die sich in Längsrichtung des Bahnsteigs (2) gegenüberliegen.

7. Vorrichtung nach einem der vorhergehenden Ansprüche, **dadurch gekennzeichnet, dass** der feste Teil (12) in mehrere Module (12₁, 12₂, 12₃) unterteilt ist, die in Längsrichtung des Bahnsteigs (2) verteilt sind und jeweiligen Modulen (20₁, 20₂, 20₃) des beweglichen Teils (20) zugeordnet sind.

8. Vorrichtung nach Anspruch 6 und 7 zusammengenommen, **dadurch gekennzeichnet, dass** von den Modulen des festen Teils (12) zwei Endmodule (12₁, 12₂) jeweils an den gegenüberliegenden Enden des festen Teils in Längsrichtung des Bahnsteigs (2) vorgesehen sind und jeweils den beiden Triebeinheiten (40₁, 40₂) zugeordnet sind, während ein oder mehrere Zwischenmodule (12₃) zwischen den Endmodulen vorgesehen sind.

9. Vorrichtung nach einem der vorhergehenden Ansprüche, **dadurch gekennzeichnet, dass** der bewegliche Teil (20) im Wesentlichen aus einer Schmelzplatte (22) mit innerer Wabenstruktur besteht und insbesondere aus Aluminium oder aus einer auf Aluminium basierenden Legierung ausgebildet ist.

10. Vorrichtung nach einem der vorhergehenden Ansprüche, **gekennzeichnet durch** mindestens zwei Laser-Sensoren als Entfernungsmesser.
